# EUROPEAN PATENT APPLICATION

(11) **EP 3 960 724 A1**
(43) Date of publication of application: **02.03.2022**
(21) Application number: 20192401.6
(22) Date of filing: 24.08.2020
(51) Int. Cl.: C05G 3/20, C05G 5/30

(54) **CONDITIONING AGENT FOR A PARTICULATE FERTILIZER**

(71) Applicant: YARA International ASA, 0277 Oslo (NO)
(72) Inventor: Nafisi, Vajiheh, 3926 PORSGRUNN (NO); Tande, Terje, 3970 LANGESUND (NO)
(74) Representative: AWA Sweden AB

(57) **Abstract**

The present disclosure is related to a conditioning agent for reducing water absorption and dust formation of a particulate fertilizer, comprising 50 to 60 weight% of wax, 30 to 40 weight% of oil, 1 to 15 weight% of a resin being oil-soluble and miscible with wax and oil, and optionally 0.01 to 2.0 weight% of a viscoelastic elastomer which is soluble in oil. The conditioning agent may be applied to a particulate substrate, in particular a fertilizer particulate substrate, to reduce the moisture uptake and the dust formation of the substrate, in particular wherein the substrate is blended with other particulate compositions.

## Description

### Field of the invention

The present disclosure is related a conditioning agent comprising a wax, an oil, a resin, and optionally a polymer. The conditioning agent may be applied to a particulate substrate, in particular a fertilizer particulate substrate, to reduce the moisture uptake and the dust formation of the substrate, in particular wherein the substrate is blended with other particulate compositions.

### Background of the invention

It is well known that hygroscopic particulate fertilizers like NP-fertilizers and calcium nitrate (CN) will cause problems when they are exposed to moisture. The absorbed moisture will increase the caking of the particles during storage and the formation of dust during handling. Handling of the product in bulk will be accordingly impossible unless these problems are solved. Furthermore, these problems are amplified at temperatures and humidity experienced in tropical and subtropical areas.

A conditioning agent comprising 28 weight% of wax, 68 weight% of oil, 4 weight% of resin and 0.3 weight% of polyisobutylene was disclosed in WO16083435A1 (Yara, 2016) and fertilizer particles coated with this condition agent displayed a good reduction in moisture absorption and dust formation. However, when particles coated with the conditioning agent provided therein were physically mixed, or blended, with other fertilizer particles, for example potassium chloride or potassium sulphate, it was observed that the hard potassium particles were damaging the coating layer, leading to an increased dust formation, which is not desirable.

Thus, there is a need to develop a new conditioning agent providing a good protection against moisture absorption and dust formation, but more resistant to abrasion.

### Summary of the invention

In one aspect, the present disclosure provides a conditioning agent comprising 50 to 60 weight% of wax, 30 to 40 weight% of oil, 1 to 15 weight% of a resin being oil-soluble and miscible with wax and oil, and optionally 0.01 to 2.0 weight% of a viscoelastic elastomer which is soluble in oil.

In another aspect, the present disclosure provides a particulate fertilizer composition comprising a particulate substrate and 0.05 to 2.0 weight%, in particular 0.1 to 1.0 weight%, of a coating comprising the conditioning agent according to the present disclosure.

In another aspect, the present disclosure provides a fertilizer blend composition comprising the particulate fertilizer composition according to the present disclosure and one or more components in particulate form selected from the group of nitrates, phosphates, sulphates or chlorides.

In another aspect, the present disclosure provides a method for producing a particulate composition comprising the step of applying a conditioning agent according to the present disclosure to a particulate substrate.

In another aspect, the present disclosure provides a method for preparing a conditioning agent according to any one of claims 1 to 8 comprising a wax, an oil, a resin and optionally a viscoelastic polymer. The method comprises the steps of, optionally dissolving the viscoelastic polymer in an amount of the wax; and mixing the oil, the resin, the wax and optionally the wax comprising the viscoelastic polymer obtained in the first step.

In another aspect, the present disclosure provides the use of a conditioning agent according to the present disclosure for the coating of a particulate substrate, in particular a fertilizer particulate substrate.

### Detailed description of the invention

Unless otherwise defined, all terms used in disclosing the invention, including technical and scientific terms, have the meaning as commonly understood by one of ordinary skill in the art to which this invention belongs. By means of further guidance, term definitions are included to better appreciate the teaching of the present invention.

All references cited in this description are hereby deemed to be incorporated in their entirety by way of reference.

As used herein, the following terms have the following meanings:
"A", "an", and "the" as used herein refers to both singular and plural referents unless the context clearly dictates otherwise. By way of example, "a compartment" refers to one or more than one compartment.

"About" as used herein referring to a measurable value such as a parameter, an amount, a temporal duration, and the like, is meant to encompass variations of +/-20 % or less, in particular +/-10 % or less, more in particular +/-5 % or less, even more in particular +/-1 % or less, and still more in particular +/-0.1 % or less of and from the specified value, in so far such variations are appropriate to perform in the disclosed invention. However, it is to be understood that the value to which the modifier "about" refers is itself also specifically disclosed.

"Comprise", "comprising", and "comprises" and "comprised of" as used herein are synonymous with "include", "including", "includes" or "contain", "containing", "contains" and are inclusive or open-ended terms that specifies the presence of what follows e.g. component and do not exclude or preclude the presence of additional, non-recited components, features, element, members, steps, known in the art or disclosed therein.

The recitation of numerical ranges by endpoints includes all numbers and fractions subsumed within that range, as well as the recited endpoints.

The expression "weight percent", "%wt" or "weight%", here and throughout the description unless otherwise defined, refers to the relative weight of the respective component based on the overall weight of the formulation.

Tropical and sub-tropical climate conditions refer to climates characterized by high temperatures and important precipitation throughout the year.

In one aspect, the present disclosure provides a conditioning agent comprising 50 to 60 weight% of wax, 30 to 40 weight% of oil, 1 to 15 weight% of a resin being oil-soluble and miscible with wax and oil, and optionally 0.01 to 2.0 weight% of a viscoelastic elastomer which is soluble in oil.

It was found that using a high amount of wax, in particular 50 to 60 weight% of wax relative to the total weight of the conditioning composition, gave a better resistant to abrasion to the conditioning agent, and also decreased the water absorption of the coated particles under tropical and sub-tropical climate conditions.

Until now, it was not encouraged to use such high amounts of wax because the resulting condition agent has a congealing point about 45 °C. The congealing point is the temperature at which a liquid composition solidifies. It has always been recommended to coat fertilizer particles with a composition having a congealing point below 45 °C to ensure a good repartition of the coating agent on the particles. A typical method to coat fertilizer particles is to place fertilizer particles in a coating drum and spread in the drum the pre-heated coating agent. The fertilizer particles have a temperature between 40 to 45 °C, so using a coating agent with a congealing point above that might cause the coating agent to solidify as it contacts the particles without coating correctly the whole particle.

Surprisingly, it was found that it was possible to coat fertilizer particles with a coating agent having a congealing point of at least 50 °C.

### Wax

In one embodiment, the conditioning agent comprises 51 to 60 weight%, in particular 51 to 60 weight%, more in particular 52 to 60 weight%, even more in particular 53 to 60 weight%, even more in particular 54 to 60 weight%, even more in particular 54 to 59 weight%, even more in particular 54 to 58 weight%, of wax. It was found that a conditioning agent with a very high amount, for example above 50 weight%, was compatible with the other components of the conditioning agent and provided very good properties to the conditioning agent.

In one embodiment, the conditioning agent comprises 51 to 60 weight%, in particular 51 to 59 weight%, more in particular 51 to 58 weight%, even more in particular 52 to 58 weight%, even more in particular 53 to 58 weight%, even more in particular 54 to 58 weight%, of wax.

In one embodiment, the wax is selected from the group of intermediary wax, petroleum wax, vegetable wax, animal wax, mineral wax or mixtures thereof. There are several types of wax commercially available: petroleum wax, such as paraffin wax, intermediary wax and microcrystalline wax; vegetable wax, such as carnauba wax, bayberry wax, candelilla wax, jojoba wax, ouricury wax, soy wax, tallow tree wax; animal wax, such as beeswax, lanolin, shellac wax, spermaceti; and mineral wax, such as ceresin wax, montan wax, ozocerite or peat wax. Paraffin waxes are defined as predominantly straight-chain saturated hydrocarbons with smaller proportions of branched-chain and cyclo-paraffinic compounds. Intermediary waxes are mixtures of straight-chain, branched-chain and cyclo-paraffinic compounds, intermediate in character between those of paraffin and microcrystalline waxes. Microcrystalline waxes are hydrocarbons of higher average molecular weight than those of paraffin waxes with a wider range of components containing a high portion of branched-chain and cyclo-paraffinic hydrocarbons.

In one embodiment, the wax is selected from the group of petroleum wax, vegetable wax or mixtures thereof.

Vegetable and animal waxes are synthesized by many plants and animals. Those of animal origin typically consist of wax esters, derived from a variety of carboxylic acids and fatty alcohols. In waxes of plant origin, characteristic mixtures of unesterified hydrocarbons may predominate over esters. The composition depends not only on species, but also on geographic location of the organism. Because they are mixtures, naturally produced waxes are softer and melt at lower temperatures than the pure components.

It was found that it was possible to use any kind of wax in the conditioning agent according to the present disclosure. It may also be possible to use a mixture of at least two waxes among the ones mentioned above. It may be possible to mix two waxes belonging to the same family or category, for example mixing two petroleum waxes, but it may also be possible to mix two waxes from different families or categories, for example an intermediary wax with a vegetable wax.

In one embodiment, the wax is an intermediary wax. It was observed that the use of an intermediary wax yielded a conditioning agent that provided a slightly increased reduction in water absorption by the coated fertilizer particles compared to other types of wax.

### Resin

The resin component of the new conditioning agent must be soluble in the oil component and miscible with the wax and oil component. The resin provides elasticity to the conditioning agent, but a composition comprising too much resin may be very sticky, which complicates the application of the conditioning agent on the fertilizer particles and may affect negatively their handling and storage. The resulting coating should be hard and glassy or being able to impregnate the particle surface. Also, this component should be environmentally acceptable and degradable in the soil as explained above. Within the above framework, the resin component may be chosen from the group of synthetic resins or natural resins.

Synthetic resins comprise resins, such as coumarone-indene resins (synthetic resins of low molecular weight produced by polymerization of mixtures of unsaturated compounds, primarily indene and coumarone, which have been extracted from the by-products of coal coking (crude benzene) and from the aroma-tic high-boiling products of petroleum pyrolysis), esterified natural resins such as rosin, for example pentaerythritol rosin ester, phenol formaldehyde resins, furfuryl alcohol resins, polyester resins and polyurethane resins.

Natural resins are primarily derived from trees and shrubs and comprise amorphous mixtures of carboxylic acids, essentially oil and terpenes. Examples of useful natural resins are rosin, copal, mastic, balsam and damar.

In one embodiment, the resin is selected from the group of synthetic resins, such as coumarone-indene resins, esterified natural resins such as rosin, for example pentaerythritol rosin ester, phenol formaldehyde resins, furfuryl alcohol resins, polyester resins, polyurethane resins or natural resins.

In one embodiment, the resin is selected from the group of synthetic resins, such as coumarone-indene resins, esterified natural resins such as rosin, for example pentaerythritol rosin ester, or natural resins.

In one embodiment, the resin is selected from the group of synthetic resins, such as coumarone-indene resins, esterified natural resins such as rosin, for example pentaerythritol rosin ester, polyester resins or polyurethane resins.

In one embodiment, the resin is selected from the group of pentaerythritol rosin esters or coumarone-indene resins, for example obtainable from Neville Chemical Company (Pittsburgh, USA).

In one embodiment, the conditioning agent according to the invention comprises 1 to 15 weight%, in particular 2 to 8 weight%, more in particular 4 to 8 weight%, of a resin.

In one embodiment, the conditioning agent according to the invention comprises 6 weight% of a resin. In one embodiment, the conditioning agent according to the invention comprises 8 weight% of a resin.

### Oil

The oil component is a carrier or solvent for the wax and resin components, but does also have some effect on reducing the dust formation during handling of the fertilizer.

In one embodiment, the oil is selected from the group of mineral oil, hydrotreated process oil, vegetable oil or refined mineral oil. These oils were found to be particularly suitable for a conditioning agent for fertilizer particles.

In one embodiment, the oil is selected from the group of mineral oil, refined mineral oil, or vegetable oil. In one embodiment, the oil is selected from the group of mineral oil, or vegetable oil. In one embodiment, the oil is a mineral oil.

Mineral oils (sometimes called white oils) are any of various colourless, odourless, light mixtures of higher alkanes having moderate viscosity, low volatility and a high flash point, originating from a non-vegetable (mineral) source, in particular a distillate of petroleum (process oils). They may be selected from the group of paraffinic oils (based on n-alkanes), naphthenic oils (based on cyclo-alkanes) or aromatic oils (based on aromatic hydrocarbons). They may be hydrotreated. Refined mineral oils will also be applicable, but are not recommended from an environmental point of view.

Vegetable oils are triglycerides, extracted from plants or the seeds thereof, such as corn oil, canola oil, rapeseed oil, sunflower oil, soya oil, linseed oil or mixtures thereof.

In one embodiment, the oil is selected from the group of naphthenic process oils, such as obtainable for Nynas AB, Stockholm, Sweden or paraffinic process oils, such as obtainable from Total Lubricants, Nanterre, France.

In one embodiment, the conditioning agent comprises 30 to 40 weight%, in particular 31 to 40 weight%, more in particular 31 to 39 weight%, even more in particular 32 to 39 weight%, even more in particular 33 to 39 weigh%, even more in particular 34 to 39 weight%, of oil. It was found that it was possible to use a low amount of oil, as low as 30 weight%, in a conditioning agent and still obtain a flowable composition that coats correctly fertilizer particles.

### Elastomer

The elastomer component is a high molecular weight viscoelastic elastomer which is soluble in oil and has an average relative molecular mass (viscosity average, g/mol) of 30,000 to 5,000,000, in particular of 50,000 to 4,000,000, more in particular of 100,000 to 3,000,000, even more in particular of 200,000 to 2,000,000. It was observed that the presence of a polymer in a conditioning agent coated onto solid particles further decreases the formation of dust by these particles.

In one embodiment, the elastomer comprised in the conditioning agent is polyisobutylene having an average relative molecular mass (viscosity average, g/mol) of 40,000 to 1,300,000, in particular of 100,000 to 1,250,000, more in particular of 250,000 to 1,200,000.

In one embodiment, the elastomer is selected from the group of a styrene-isopropene-styrene block copolymer, a styrene-butadiene-styrene block copolymer, a styrene-ethylene/butylene block copolymer, or a styrene-butadiene block copolymer.

In one embodiment, the elastomer is polyisobutylene with a relative molecular mass (viscosity average, g/mol) of about 1,110,000, such as Oppanol N100, commercialized BASF (Germany). It has an intrinsic viscosity, as measured in isooctane at 20 °C (Staudinger Index Jo) of 241 - 294 cm3/g.

In one embodiment, the conditioning agent according to the present disclosure comprises 0.1 to 2.0 weight%, such as 0.1-1.0 weight%, as 0.5-1.0 weight%, as 1-1.0 weight%, as 0.5-2.0 weight%, as 1-2.0 weight%, or as 1.1-2.0 weight%; in particular 0.5 to 2.0 weight%, in particular 1.0 to 2.0 weight%, more in particular 1.1 to 2.0 weight%, of the viscoelastic elastomer.

In WO16083435A1, it is stated that the maximum amount of elastomer should not exceed 1 weight%. The presence of a high amount of elastomer can cause the conditioning agent to be too sticky and thus cause problems in the application to solid particles, but also during storage of the coated particles. However, it was found that it was possible to increase the amount of elastomer above 1.0 weight% and still obtain a conditioning agent with the desired properties.

In some countries, the presence of a polymer which may be not biodegradable is not tolerated or only at low concentrations. Therefore, in some embodiments, the conditioning agent may comprise at most 1.0, 0.9, 0.8, 0.7, 0.6, 0.5, 0.4, 0.3, 0.2, 0.1 weight% of the elastomer. In one embodiment, the conditioning agent according to the present disclosure comprises 0.01 to 1.0 weight%, in particular 0.01 to 0.9 weight%, in particular 0.01 to 0.8 weight%, more in particular 0.01 to 0.7 weight%, even more in particular 0.01 to 0.6 weight%, even more in particular 0.01 to 0.5 weight%, even more in particular 0.01 to 0.4 weight%, of the viscoelastic elastomer.

In order to improve the shelf life of the coating, an anti-oxidant may be added to the conditioning agent. The inventors have also discovered that the addition of small amounts of t-butyl hydroxytoluene (CAS Nr. 128-37-0) may prolong the shelf life of the conditioning agent considerably. Hence, this component may additionally be included into the conditioning agent according to the invention.

In one embodiment, the conditioning agent comprises 0.001 to 0.1 weight%, in particular 0.005 to 0.09 weight%, more in particular 0.007 to 0.08 weight%, even more in particular 0.008 to 0.05 weight%, of an anti-oxidant, in particular t-butyl hydroxytoluene.

In one embodiment, the conditioning agent comprises 50 to 60 weight% of wax, 30 to 39 weight% of oil, 1 to 15 weight% of a resin being oil-soluble and miscible with wax and oil, and optionally 0.01 to 2.0 weight% of a viscoelastic elastomer which is soluble in oil.

In one embodiment, the conditioning agent comprises 51 to 60 weight% of wax, 30 to 40 weight% of oil, 2 to 10 weight% of a resin, optionally 0.01 to 2.0 weight% of a viscoelastic polymer soluble in oil, and optionally 0.01 weight% of t-butyl hydroxytoluene.

In one embodiment, the conditioning agent comprises 51 to 60 weight% of wax, 30 to 39 weight% of oil, 2 to 10 weight% of a resin, optionally 0.01 to 2.0 weight% of a viscoelastic polymer soluble in oil, and optionally 0.01 weight% of t-butyl hydroxytoluene.

In one embodiment, the conditioning agent comprises 52 to 58 weight% of wax, 30 to 39 weight% of oil, 4 to 8 weight% of a resin, optionally 0.01 to 2.0 weight% of a viscoelastic polymer soluble in oil, and optionally 0.01 weight% of t-butyl hydroxytoluene.

In one embodiment, the conditioning agent comprises 52 to 58 weight% of wax, 30 to 39 weight% of oil, 4 to 8 weight% of a resin, optionally 0.01 to 2.0 weight% of a viscoelastic polymer soluble in oil, and optionally 0.01 weight% of t-butyl hydroxytoluene.

In one embodiment, the conditioning agent comprises 52 to 58 weight% of an intermediary wax, 30 to 40 weight% of a naphthenic oil, 4 to 8 weight% of pentaerythiol rosin ester, optionally 0.01 to 2.0 weight% of polyisobutylene, and optionally 0.01 weight% of t-butyl hydroxytoluene.

In another aspect, the present disclosure provides a particulate fertilizer composition comprising a particulate substrate and 0.05 to 2.0 weight%, in particular 0.1 to 1.5 weight%, more in particular 0.2 to 1.0 weight%, even more in particular 0.3 to 0.9 weight%, even more in particular 0.4 to 0.8 weight%, of a coating comprising the conditioning agent according to the present disclosure. The conditioning agent may reduce the rate of water absorption of the particulate substrate by more than 90 %, in particular up to 98 %, and dust formation by more than 80 %, in particular up to 95 %.

In one embodiment, the particulate substrate is a nitrogen-containing fertilizer, selected from the group of NP, NK, NPK, ammonium nitrate (AN), calcium ammonium nitrate (CAN), calcium nitrate (CN), AN with sulfur, urea, and urea-ammonium sulfate (UAS), or mixtures thereof, in particular wherein the particulate substrate is CN.

In one embodiment, the particulate fertilizer composition comprises 0.4 to 0.8 weight% of a coating comprising the conditioning agent according to the present disclosure.

In one embodiment, the particulate substrate is calcium nitrate, and the particulate fertilizer composition comprises 0.05 to 1.0 weight% of a coating comprising 50 to 60 weight% of wax, 30 to 40 weight% of oil, 4 to 8 weight% of a resin being oil-soluble and miscible with wax and oil, and optionally 0.01 to 2.0 weight% of a viscoelastic elastomer which is soluble in oil.

In one embodiment, the particulate substrate is a NPK fertilizer, and the particulate fertilizer composition comprises 0.05 to 1.0 weight% of a coating comprising 51 to 60 weight% of wax, 30 to 39 weight% of oil, 4 to 8 weight% of a resin being oil-soluble and miscible with wax and oil, and optionally 0.01 to 2.0 weight% of a viscoelastic elastomer which is soluble in oil.

In one embodiment, the particulate substrate comprises ammonium nitrate, and the particulate fertilizer composition comprises 0.05 to 1.0 weight% of a coating comprising 51 to 60 weight% of wax, 30 to 39 weight% of oil, 4 to 8 weight% of a resin being oil-soluble and miscible with wax and oil, and optionally 0.01 to 2.0 weight% of a viscoelastic elastomer which is soluble in oil.

In one embodiment, the particulate substrate is urea, and the particulate fertilizer composition comprises 0.05 to 1.0 weight% of a coating comprising 51 to 60 weight% of wax, 30 to 39 weight% of oil, 4 to 8 weight% of a resin being oil-soluble and miscible with wax and oil, and optionally 0.01 to 2.0 weight% of a viscoelastic elastomer which is soluble in oil.

In another aspect, the present disclosure provides a fertilizer blend composition comprising the particulate fertilizer composition according to the present disclosure and one or more components in particulate form selected from the group of nitrates, phosphates, sulphates or chlorides.

Once the particulate fertilizer composition has been prepared, it may be stored in warehouse or big bags on its own, but it may also be physically mixed, i.e. blended, with other solid particles, in particular fertilizer particles. Blending different fertilizer particles, in particular particles containing different nutrients, is a popular way to provide a fertilizer composition comprising several nutrients required by crops. Producing particles containing several nutrients such as NPK particles, i.e. containing nitrogen, phosphorus and potassium, is often more expensive than producing particles containing only one type of nutrient and blending three types of particles.

In one embodiment, the one or more components in particulate form is selected from the group of ammonium nitrate, calcium nitrate, calcium ammonium nitrate, sodium nitrate, ammonium sulphate nitrate, potassium ammonium nitrate, ammonium phosphate, such as mono-ammonium phosphate (MAP) and di-ammonium phosphate (DAP), calcium bis(dihydrogen orthophosphate), super phosphate, triple superphosphate, rock phosphate, potassium sulphate (SOP), potassium magnesium sulphate, ammonium sulphate (AS), urea ammonium sulphate, urea calcium ammonium nitrate, urea ammonium sulphate, potassium chloride (MOP), urea potassium salts (UK), or mixtures thereof.

In one embodiment, the one or more components in particulate form is selected from the group of ammonium phosphate, such as mono-ammonium phosphate (MAP) and di-ammonium phosphate (DAP), super phosphate, triple superphosphate, rock phosphate, potassium sulphate (SOP), potassium magnesium sulphate, potassium chloride (MOP), or mixtures thereof.

In one embodiment, the one or more components in particulate form is selected from the group of ammonium phosphate, such as mono-ammonium phosphate (MAP) and di-ammonium phosphate (DAP), super phosphate, triple superphosphate, rock phosphate, or mixtures thereof.

In one embodiment, the one or more components in particulate form is selected from the group of potassium sulphate (SOP), potassium magnesium sulphate, potassium chloride (MOP), or mixtures thereof.

For example, calcium nitrate particles may be blended with potassium-containing particles, such as potassium chloride or potassium sulphate, to provide a fertilizer composition comprising at least three nutrients: nitrogen, calcium, and potassium.

The particulate fertilizer composition comprising the conditioning agent may be blended in a wide range of ratios with the one or more components in particulate form. In one embodiment, the ratio of particulate fertilizer composition comprising the conditioning agent to a component in particulate form, may vary from 5/95 to 95/5. The particulate fertilizer composition comprising the conditioning agent may be blended with two components in particulate form in any X/Y/Z ratio, wherein X,Y and Z are integers and X + Y + Z = 100.

In one embodiment, the fertilizer blend composition comprises calcium nitrate particles coated with the conditioning agent according to the present disclosure and potassium-containing particles.

In one embodiment, the fertilizer blend composition comprises calcium nitrate particles coated with the conditioning agent according to the present disclosure and SOP particles.

In one embodiment, the fertilizer blend composition comprises calcium nitrate particles coated with the conditioning agent according to the present disclosure and SOP particles in a 1/1 weight ratio.

In another aspect, the present disclosure provides a method for producing a particulate composition comprising the step of applying a conditioning agent according to the present disclosure to a particulate substrate.

A range of techniques, well known in the fertilizer industry, exist to apply a coating agent to solid particles. For examples, particles may be loaded in a drum and the coating agent is sprayed via nozzles in the drum. The drum is moving the particles so that the coating agent is evenly distributed on all the particles.

The amount of coating agent applied to the particles may be adjusted precisely to obtain the desired properties. The coating should have a minimum thickness to efficiently reduce the water absorption and dust formation of the particles, but it should not be too thick as this may create problems., for example the particles may become too sticky. It was found that a loading between 0.05 to 2.0 weight%, in particular 0.1 to 1.0 weight%, was satisfactory.

The conditioning agent according to the present disclosure will, to some degree, penetrate into the surface and impregnate the surface of the fertilizer particles, especially when these fertilizer particles are somewhat porous. This effect makes it also possible to apply rather large amounts of conditioning agent onto the particles.

The temperature of the particulate substrate before the conditioning agent may be higher than ambient temperature. In particular, if the conditioning agent is applied just after the production of the particulate substrate, the particulate substrate may have a temperature above 25, or 30, or 35 °C. In particular where the particulate substrate is a fertilizer particulate substrate, the substrate is usually prepared from a hot melt having a temperature above 100 °C. It may be an advantage that the particulate substrate has a temperature above the atmospheric temperature as it will slow down the cooling of the conditioning agent. When the conditioning agent has a rather high congealing point, for example at least 50 °C, a slower cooling ensures a better distribution of the conditioning agent on the particulate substrate.

The coating agent should be applied to the particulate substrate as a liquid, so if the coating agent has a congealing point above ambient temperature, it needs to be pre-heated to obtain a liquid composition.

In one embodiment, the method comprises a step of mixing the total amount of elastomer into an amount of either the oil or the wax component of the conditioning agent according to the invention, and mixing said elastomer/wax or elastomer/oil component mixture with the other components according to the invention.

In one embodiment, the elastomer component can also be melted into an amount of paraffin wax and said amount of paraffin wax is subsequently mixed with the other components of the conditioning agent according to the invention. Typically, the elastomer component can be added in an amount ranging from 10 to 50 weight%, in particular 25 weight%, into the paraffin wax (amounts relative to the amount of paraffin wax). The amount of the elastomer/paraffin wax mixture may vary between 1 and 5 weight% with respect to the total weight of the conditioning agent, and if, for example, 25% elastomer in the paraffin/wax mixture is used, the amount of elastomer in the final conditioning agent is typically 0.25 -1.25 weight%. Using the aforementioned step, the elastomer can be more homogeneously dissolved into the conditioning agent composition. The type of paraffin wax can be any type and easily selected by the skilled person. Hence, the invention also relates to a conditioning agent according to the invention, wherein the agent further comprises 1 to 5 weight% of paraffin wax as a second wax component, in addition to the first main wax component, which may also be a paraffin wax, as defined above.

In another aspect, the present disclosure provides a method for preparing a conditioning agent according to any one of claims 1 to 8 comprising a wax, an oil, a resin and optionally a viscoelastic polymer. The method comprises the steps of, optionally dissolving the viscoelastic polymer in an amount of the wax; and mixing the oil, the resin, the wax and optionally the wax comprising the viscoelastic polymer obtained in the first step.

When the conditioning agent comprises a viscoelastic polymer, it was found to be an advantage to first dissolve the viscoelastic polymer in an amount of the wax comprised in the conditioning agent. The viscoelastic polymer may be added into an amount of the wax and heated up until the polymer melts, or the polymer may be first melted and then added to an amount of wax.

In one embodiment, the viscoelastic polymer is added to about 10%, 15%, 20%, 25%, 30%, 35%, 40; 45%, 50%, 55%, 60% of the wax comprised in the conditioning agent.

The wax comprising the viscoelastic polymer may then be mixed with the remainder of the wax, the oil and resin comprised in the conditioning agent. It may be preferable to mix all the components at a temperature about the congealing point of the mixture, or above the melting point of all the components to ensure a homogeneous result.

In another aspect, the present disclosure provides the use of a conditioning agent according to the present disclosure for the coating of a particulate substrate, in particular a fertilizer particulate substrate.

### Example 1: lab scale

A series of conditioning agent with compositions as described in Table 1 were prepared by mixing the different components in a research lab.

**Table 1: Compositions of conditioning agent**

| **Name of composition** | **Oil (wt%)** | **Wax (wt%)** | **Resin (wt%)** | **Polymer (wt%)** | **Anti-oxidant (wt%)** |
|---|---|---|---|---|---|
| Reference | 67 | 28 | 4 | 1 | 0.01 |
| Test 1 | 39 | 56 | 4 | 1 | 0.01 |
| Test 2 | 35 | 56 | 8 | 1 | 0.01 |

### Congealing and drop point:

The congealing point of the compositions was measured by the following method: the composition was heated until it becomes liquid, and slowly cooled until it solidifies. The point where the liquid composition solidifies again is called the congealing point. The drop point measures the temperature where a heated solid composition becomes liquid. For a same composition, both measurements should be equal plus-or-minus 1°C. The results are summarized in Table 2 below: the two new conditioning agents showed a congealing or drop point at about 50 °C, which is not recommended according to the general knowledge of the field, as there is an increased risk that they will not coat well enough the fertilizers particles.

**Table 2: Congealing and drop point of compositions**

| **Composition** | **Congealing point (°C)** | **Drop point (°C)** |
|---|---|---|
| Reference | 43.8 | 43.0 |
| Test 1 | 50.0 | 49.8 |
| Test 2 | 50.0 | 50.8 |

### Penetration test:

A rheometer can also perform a penetration test: a thin layer of a composition is placed on a plate and a probe is placed on the surface of the layer. A probe applies an increasing force on the layer until the probe reaches the plate. The hardness of the composition may be correlated to the amount of force required by the probe to reach the plate: the higher the force, the harder the composition is. It has been found that a harder composition will be more resistant to abrasion when particles coated with the new conditioning agent are mixed with other solid particles. The results are summarized in table 3, wherein the two new conditioning agents displayed a hardness of at least 250% of the reference conditioning agent.

**Table 3: Hardness of compositions**

| **Composition** | **Maximum force applied (N)** |
|---|---|
| Reference | 8.5 ± 1.1 |
| Test 1 | 21.9 ± 5.4 |
| Test 2 | 22.1 ± 4.1 |

The conditioning agents were applied to calcium nitrate particles, so that the coated particles comprised 0.6 weight% of the conditioning agent.

### Water absorption:

An amount of uncoated and coated particles were stored for 24 h at 25°C under 75 relative humidity (RH). These temperature and humidity conditions are typical of tropical climates. The particles are weighted at the beginning and at the end of the storage to obtain the amount of water absorbed by the particles. The reduction of water absorption in % is obtained by dividing the difference in water absorbed by uncoated and coated particles with the water absorbed by the uncoated particles. All conditioning agents reduced the water absorption by at least 97%.

Another batch of coated and uncoated particles were then blended with potassium sulphate (SOP) particles and stored for 24 h at 25 °C and 75 RH.

The reduction in water absorption is summarized in table 4. The coatings Test 1 and Test 2 performed slightly better or better than the reference sample.

**Table 4: Effect on water absorption of compositions**

| **Composition** | **Reduction in water absorption (%)** |
|---|---|
| Reference | 91.5 |
| Test 1 | 93.3 |
| Test 2 | 92.0 |

### Abrasion dust:

The coated particles were also tested for dust before and after blending with the SOP particles. The dust was measured using the "tilting method": the particles, with and without SOP, are first sieved with a 1 mm sieve to remove the dust present in the samples, then placed in a container which is turned upside-down 20 times. The particles are then sieved with a 0.5 mm sieve, and any solids going through the sieve is classified as dust. The results are summarized in table 5 below: the compositions Test 1 and 2 performed better than the reference agent in the blending experiment. These two compositions were further tested on a larger scale.

**Table 5: Effect on dust of compositions**

| **Composition** | **Before blend (mg/kg)** | **After blend (mg/kg)** |
|---|---|---|
| Reference | 520 | 1389 |
| Test 1 | 651 | 1321 |
| Test 2 | 577 | 972 |

### Example 2: pilot plant tests

The conditioning agents, Test 1 and 2 were applied to a calcium nitrate particles in concrete mixer coating apparatus on a 10 kg batch. In addition, another conditioning agent comprising, 56% of wax, 37 weight% of oil, 6 weight% of resin, 1 weight% of polymer and 0.01 weight% of an anti-oxidant agent was prepared (and referred to as Test 3 in the rest of the document) and applied to calcium nitrate particles. The coated particles were then blended with SOP particles in a 1:1 ratio.

### Water absorption:

The water absorption by the coated particles was measured before and after blending with the SOP particles (see results in table 6) with the same protocol as above. All the new conditioning agents reduced the water absorption to a similar level as the reference coating agent.

**Table 6: Effect on water absorption of compositions**

| **Composition** | **Reduction in water absorption before blend (%)** | **Reduction in water absorption after blend (%)** |
|---|---|---|
| Reference | 95.8 | 96.3 |
| Test 1 | 95.4 | 96.1 |
| Test 2 | 95.8 | 96.1 |
| Test 3 | 95.7 | 96.1 |

The dust created by the particles before and after blend with SOP was also measured (table 7). The dust before the blend was measured by the PQR method, where particles are enclosed in a container and a stream of air is pushed through the particles and a vacuum system collects the stream of air and dust from the particles. The dust of the blend composition is measured by the "tilting method" as described above. The three test condition agents reduced the amount of dust measured by at least 6% for the blend composition.

**Table 7: Effect on dust of compositions**

| **Composition** | **Before blend (mg/kg)** | **After blend (mg/kg)** |
|---|---|---|
| Reference | 112 | 1317 |
| Test 1 | 71 | 1234 |
| Test 2 | 112 | 1162 |
| Test 3 | 61 | 1234 |

## Claims

1. A conditioning agent for reducing dust formation of a particulate fertilizer in a physical blend, comprising 50 to 60 weight% of wax, 30 to 40 weight% of oil, 1 to 15 weight% of a resin being oil-soluble and miscible with wax and oil, and optionally 0.01 to 2.0 weight% of a viscoelastic elastomer which is soluble in oil.

2. The conditioning agent according to claim 1, wherein that the conditioning agent comprises 51 to 60 weight%, in particular 52 to 59 weight%, more in particular 54 to 58 weight%, of wax.

3. The conditioning agent according to claim 1 or 2, wherein that the conditioning agent comprises 30 to 39 weight%, in particular 32 to 39 weight%, more in particular 34 to 39 weight%, of oil.

4. The conditioning agent according to any one of claims 1 to 3, wherein the wax is selected from the group of intermediary wax, paraffin wax, microcrystalline wax, carnauba wax, vegetable wax or mixtures thereof.

5. The conditioning agent according to any one of claims 1 to 4, wherein the oil is selected from the group of mineral oil, hydrotreated process oil, vegetable oil or refined mineral oil.

6. The conditioning agent according to any one of claims 1 to 5, wherein the conditioning agent comprises 2 to 10 weight%, in particular 4 to 8 weight%, of resin.

7. The conditioning agent according to any one of claims 1 to 6, wherein the resin is selected from the group of synthetic resins, such as coumarone-indene resins, esterified natural resins such as rosin, for example pentaerythritol rosin ester, phenol formaldehyde resins, furfuryl alcohol resins, polyester resins, polyurethane resins or natural resins.

8. The conditioning agent according to any one of claims 1 to 7, wherein the elastomer is selected from the group of polyisobutylene or styrene-isoprene-styrene block copolymer.

9. The conditioning agent according to any one of claims 1 to 8, the conditioning agent comprises 0.001 to 0.1 weight%, in particular 0.005 to 0.05 weight%, of an anti-oxidant, in particular t-butyl hydroxytoluene.

10. A particulate fertilizer composition comprising a particulate substrate and 0.05 to 2.0 weight%, in particular 0.1 to 1.0 weight%, of a coating comprising the conditioning agent according to any one of claims 1 to 9.

11. The particulate fertilizer composition according to claim 10, wherein the particulate substrate is a nitrogen-containing fertilizer, selected from the group of NP, NK, NPK, ammonium nitrate (AN), calcium ammonium nitrate (CAN), calcium nitrate (CN), AN with sulfur, urea, and urea-ammonium sulfate (UAS), or mixtures thereof, in particular wherein the particulate substrate is selected from the group of NPK, AN, CAN, CN, urea, UAS or mixtures thereof, more in particular wherein the particulate substrate is urea or CN.

12. The particulate fertilizer composition according to claim 10 or 11, wherein the particulate substrate is calcium nitrate, and the particulate fertilizer composition comprises 0.05 to 1.0 weight% of a coating comprising 50 to 60 weight% of wax, 30 to 40 weight% of oil, 4 to 8 weight% of a resin being oil-soluble and miscible with wax and oil, and optionally 0.01 to 2.0 weight% of a viscoelastic elastomer which is soluble in oil.

13. A fertilizer blend composition comprising the particulate fertilizer composition according to any one of claims 10 to 12 and one or more components in particulate form selected from the group of nitrates, phosphates, sulphates or chlorides.

14. The fertilizer blend composition according to claim 13, wherein the one or more components in particulate form comprises potassium chloride and/or potassium sulphate.

15. A method for producing a particulate fertilizer composition according to any one of claims 10 to 12 comprising the step of applying a conditioning agent according any one of claims 1 to 8 to a particulate substrate.

16. A method for preparing a conditioning agent according to any one of claims 1 to 8 comprising a wax, an oil, a resin and optionally a viscoelastic polymer, comprising the steps of, optionally dissolving the viscoelastic polymer in an amount of the wax; and mixing the oil, the resin, the wax and optionally the wax comprising the viscoelastic polymer obtained in the first step.

17. Use of a conditioning agent according to any one of claims 1 to 9 for the coating of a particulate substrate, in particular a fertilizer particulate substrate.
